# EUROPEAN PATENT APPLICATION

(11) **EP 2 944 516 A1**
(43) Date of publication of application: **18.11.2015**
(21) Application number: 15167581.6
(22) Date of filing: 13.05.2015
(51) Int. Cl.: B60Q 1/52, B60Q 1/26, B60Q 5/00, B60R 21/00, B60R 21/34, G08G 1/16

(54) **WARNING TO A PEDESTRIAN IN DANGEROUS SITUATION**

(30) Priority: 13.05.2014 US 201461992460 P; 08.05.2015 US 201514707764
(71) Applicant: Continental Automotive Systems, Inc., Auburn Hills, MI 48326 (US)
(72) Inventor: Skvarce, Jeffrey, Clarkston, MI Michigan 48346 (US)
(74) Representative: Isarpatent

(57) **Abstract**

A method of controlling a vehicle to increase pedestrian protection comprises monitoring data from a plurality of sensors with an electronic control unit and determining a probability that a detected object proximate to the vehicle is a pedestrian. A first warning is provided to the pedestrian with at least one of an audible and visual warning. A second warning is provided to the pedestrian with at least one of an audible and visual warning when the pedestrian moves closer to the vehicle. The second warning has increased intensity compared to the first warning. Finally, at least one vehicle action is provided to mitigate an accident when the pedestrian continues in proximity to the vehicle following the second warning.

## Description

### TECHNICAL FIELD

The present disclosure relates to automotive vehicles, and more particularly to safety systems for automotive vehicles.

### BACKGROUND

An automotive vehicle may include a pedestrian protection system to warn the vehicle operator and adapt the vehicle responses to avoid impact and to minimize pedestrian injuries. The pedestrian protection system utilizes sensors and cameras to detect objects in the vehicle path. The pedestrian protection system analyzes the data to determine if the detected objects are pedestrians and warns the vehicle operator of a likely pedestrian impact. By alerting the vehicle operator of an upcoming pedestrian impact the vehicle operator may take action to avoid the pedestrian.

The pedestrian protection system may further initiate vehicle actions to avoid impact with a pedestrian or at least to mitigate the injuries to the pedestrian. The pedestrian protection system may even take autonomous action to avoid impact and/or mitigate injuries, such as application of the vehicle brakes.

However, the known pedestrian protection systems may sometimes provide a false pedestrian detection. Thus the vehicle may react to a false detection and unnecessarily alter the vehicle behavior. Limiting false detection by the system would improve system performance and limit unnecessary reactions by the vehicle that may be unwanted by the driver.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

A pedestrian protection system for a vehicle comprises a plurality of sensors to monitor an area proximate to the vehicle and an ECU connected to the plurality of sensors to determine if an object detected by the sensors is a pedestrian. The electronic control unit is configured with instructions for monitoring data from a plurality of sensors with an electronic control unit, and determining a probability that a detected object proximate to the vehicle is a pedestrian. The ECU has further instructions to provide a first warning to the pedestrian with at least one of an audible and visual warning. A second warning is provided to the pedestrian with at least one of an audible and visual warning when the pedestrian moves closer to the vehicle. The second warning has increased intensity compared to the first warning. Finally, at least vehicle action is provided to mitigate an accident when the pedestrian continues in proximity to the vehicle following the second warning.

A method of controlling a vehicle to increase pedestrian protection comprises monitoring data from a plurality of sensors with an electronic control unit and determining a probability that a detected object proximate to the vehicle is a pedestrian. A first warning is provided to the pedestrian with at least one of an audible and visual warning. A second warning is provided to the pedestrian with at least one of an audible and visual warning when the pedestrian moves closer to the vehicle. The second warning has increased intensity compared to the first warning. Finally, at least one vehicle action is provided to mitigate an accident when the pedestrian continues in proximity to the vehicle following the second warning.

Further areas of applicability of the present disclosure will become apparent from the detailed description provided hereinafter. It should be understood that the detailed description and specific examples, while indicating the preferred embodiment of the disclosure, are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIG. 1 is a schematic illustration of a side view of a vehicle having the pedestrian protection system of the present invention; and
FIG. 2 is a schematic illustration of one example implementation of the pedestrian protection system for the vehicle of Fig. 1.

### DETAILED DESCRIPTION

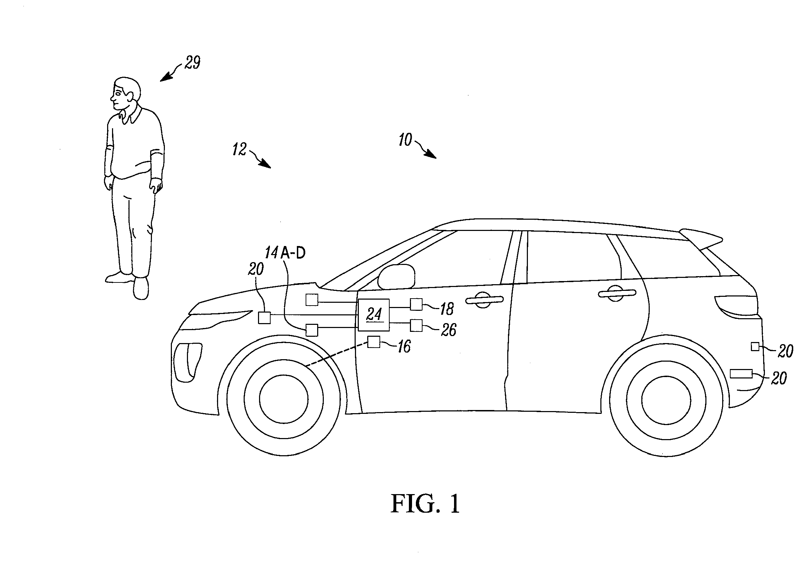

The following description is merely exemplary in nature and is in no way intended to limit the disclosure, its application, or uses. For purposes of clarity, the same reference numbers will be used in the drawings to identify similar elements. Figure 1 is a schematic illustration of a vehicle 10 having a pedestrian protection system 12. The pedestrian protection system 12 preferably incorporates other existing vehicle 10 systems such as a forward collision alert system 14A or a back-up assist system 14B for the vehicle 10 and may be utilize the same sensors and components, as described below. Throughout the applications the relative directions of forward and rear are in reference to the direction which an operator for the vehicle 10 would primarily be facing when operating the vehicle 10.

The pedestrian protection system 12 may be connected to other systems for the vehicle 10 including the forward collision alert system 14A, a back-up assist system 14B, a supplement restraint system 14C, a driver warning 14D, a brake system 16, and a steering system 18. Other systems, not shown, that provide information that may be utilized by the pedestrian protection system 12 may also be connected. Likewise, other systems, not shown, that may be used to control the vehicle 10 may also be connected to receive signals from the pedestrian protection system 12.

The pedestrian protection system 12 includes a plurality of sensors 20. The sensor(s) 20 may be any of a proximity, lidar, camera, etc. The pedestrian protection system 12 includes a module having an electronic control unit (ECU) 24. The ECU 24 receives input from the various vehicle systems 14A-14D, 16, 18 and sensors 20. As mentioned above, the sensors 20 providing input data to the ECU 24 may also be part of already existing systems 14A-14D, 16, 18 in the vehicle 10. The ECU 24 monitors the vehicle 10 information which includes monitoring a GPS system 26 and may include other systems and sensors such as, weather sensors, wheel speed sensors, a speedometer, a accelerometer, a steering sensor and a brake sensor. One skilled in the art would be able to determine which other sensors and systems may provide useful information to the pedestrian protection system 12.

The pedestrian protection system 12 may send audible warnings (via horn, speaker device, etc.) and/or a visual warning, e.g. unique flashing of the headlights, to the pedestrians 28 so they can be aware of a potential collision. The warning device 30 may be a separate device or already incorporated into the vehicle 10, such as a vehicle horn or headlights using a directed warning so the pedestrian 29 that is in danger is warned and other bystanders 28 are not distracted. Therefore, is a pedestrian is listening to music, texting, deaf, etc the audio and/or visual signals could help warn them of a close encounter and they can take necessary precautions. Since vehicle safety systems have sensors that can accurately determine the type of object detected, e.g. pedestrians, bicyclists, etc., these audio and/or visual warnings could be smart. That is, the warning may direct the audible and/or visual warning in the direction of the pedestrian 29 to focus on getting to the pedestrian, who may be in harm's way, and not bother other bystanders, who are not in danger.

In low lighting, such as at night, the light flashing could be especially helpful. The audio and/or visual warnings could also be used together for driver awareness to better protect pedestrians/bicycles. Additionally, the warning could be discreet when the probability of collision is low, and increase as the probability of collision increases.

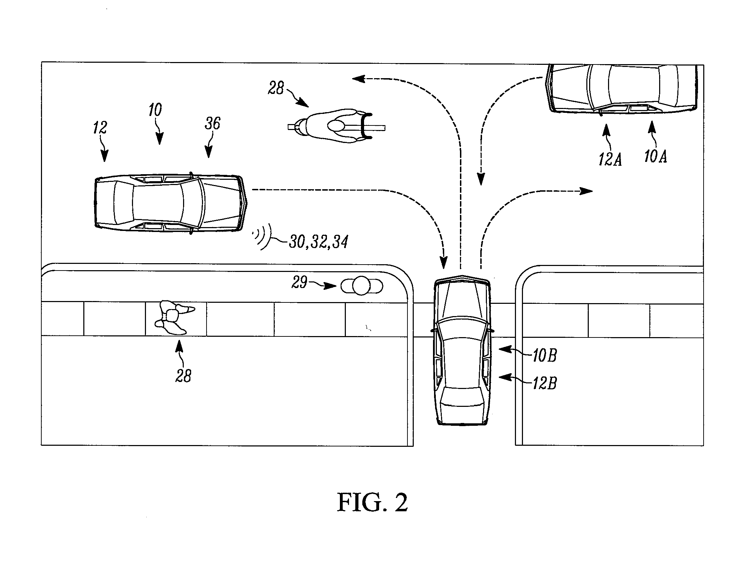

In one embodiment, illustrated in Figure 2, a bicyclist may be travelling proximate to the vehicle 10. If the bike is moves slightly in to or toward the path of the vehicle 10 the pedestrian protection system 12 may issue an audio and/or visual warning. The warning system 12 first may give a discreet warning 32, e.g. audible sound, to gently warn the bicyclist 28 that they are in an area proximate to the vehicle and may be in danger. If the bicyclist 28 further or again moves into the path of the vehicle another more aggressive warning 34 can be given. The bicyclist 28 may then move out of the area of danger, or the vehicle may start actions 36 to mitigate or avoid a possible accident. If the pedestrian 29 in danger does not react to the warnings 32, 34 the vehicle 10 could then enter emergency actions, such as braking and avoid or mitigate the potential collision.

As illustrated in Figure 2 a first vehicle 10, is issuing a warning 30 to a pedestrian 29 using the pedestrian protection system 12. However, a second vehicle 10A or a third vehicle 10B may also have a pedestrian protection system 12 capable of detecting the pedestrian(s) 28, 29 and issuing a warning 30.

Referring to Figures 1 and 2, a pedestrian protection system 12 for a vehicle 10 a plurality of sensors 20 to monitor an area proximate to the vehicle 10 and an ECU 24 connected to the plurality of sensors 20 to determine if an object detected by the sensors 20 is a pedestrian 29. The ECU 24 is configured with instructions for monitoring data from a plurality of sensors 20, and determining a probability that a detected object 29 proximate to the vehicle is a pedestrian. Other objects and bystanders 28 may be detected, but in a proximity where a collision is likely to occur.

The ECU 24 further has instructions to provide a first warning 32 to the pedestrian 29 with at least one of an audible and visual warning. A second warning 34 is provided to the pedestrian 29 with at least one of an audible and visual warning when the pedestrian 29 moves closer to the vehicle 10. The second warning 32 has increased intensity compared to the first warning. Finally, at least vehicle action 36 is provided to mitigate an accident when the pedestrian 29 continues in proximity to the vehicle 10 following the second warning 34.

The ECU 24 is further configured with instructions for determining a probability that an impact with the detected object 28 is likely to occur. The intensity of the first warning 32, and the second warning 34 are increased as the probability of impact increases. The at least one safety precaution 36 may be one of; pre-tensioning seat belts, pre-charging an airbag restraint, pre-charging a head support system, pre-charging the brakes, deploying a bumper to an extended collision position, lowering a vehicle bumper braking the vehicle and steering the vehicle 10 to avoid the detected object.

A method of controlling the vehicle 10 to increase pedestrian 28, 29 protection comprises monitoring data from a plurality of sensors 20 with an ECU 24 and determining a probability that a detected object proximate to the vehicle is a pedestrian. A first warning 32 is provided to the pedestrian 29 with at least one of an audible and visual warning. A second warning 34 is provided to the pedestrian 29 with at least one of an audible and visual warning when the pedestrian 29 moves closer to the vehicle. The second warning 34 has increased intensity compared to the first warning 32. Finally, at least one vehicle 10 action 36 is initiated by the system 12 to mitigate an accident when the pedestrian 29 continues in proximity to the vehicle 10 following the second warning 34.

While the best modes for carrying out the invention have been described in detail the true scope of the disclosure should not be so limited, since those familiar with the art to which this invention relates will recognize various alternative designs and embodiments for practicing the invention within the scope of the appended claims.

## Claims

1. A method of controlling a vehicle to increase pedestrian protection comprising:
monitoring data from a plurality of sensors with an electronic control unit;
determining a probability that a detected object proximate to the vehicle is a pedestrian;
providing a first warning to the pedestrian with at least one of an audible and visual warning;
providing a second warning to the pedestrian with at least one of an audible and visual warning when the pedestrian moves closer to the vehicle, wherein the second warning has increased intensity compared to the first warning; and
providing at least vehicle action to mitigate an accident when the pedestrian continues in proximity to the vehicle following the second warning.

2. The method of claim 1, further comprising determining a probability that an impact with the detected object is likely to occur.

3. The method according to any of the preceding claims, wherein the intensity of the first warning, and the second warning are increased as the probability of impact increases.

4. The method according to any of the preceding claims, further includes the vehicle implementing at least one safety precaution of; pre-tensioning seat belts, pre-charging an airbag restraint, pre-charging a head support system, pre-charging the brakes, deploying a bumper to an extended collision position, lowering a vehicle bumper braking the vehicle and steering the vehicle to avoid the detected object.

5. The method according to any of the preceding claims, further comprising directing the first warning and the second warning toward the pedestrian.

6. A pedestrian protection system for a vehicle comprising:
a plurality of sensors to monitor an area proximate to the vehicle;
an ECU connected to the plurality of sensors to determine if an object detected by the sensors is a pedestrian, wherein the electronic control unit is configured with instructions for;
monitoring data from a plurality of sensors with an electronic control unit;
determining a probability that a detected object proximate to the vehicle is a pedestrian;
providing a first warning to the pedestrian with at least one of an audible and visual warning;
providing a second warning to the pedestrian with at least one of an audible and visual warning when the pedestrian moves closer to the vehicle, wherein the second warning has increased intensity compared to the first warning; and
providing at least vehicle action to mitigate an accident when the pedestrian continues in proximity to the vehicle following the second warning.

7. The pedestrian protection system of claim 6 or 7, wherein the electronic control unit is further configured with instructions for determining a probability that an impact with the detected object is likely to occur.

8. The pedestrian protection system of claim 6 or 7, herein the intensity of the first warning, and the second warning are increased as the probability of impact increases.

9. The pedestrian protection system of any of the claims 6 to 8 wherein the electronic control unit is further configured with instructions implementing at least one safety precaution of; pre-tensioning seat belts, pre-charging an airbag restraint, pre-charging a head support system, pre-charging the brakes, deploying a bumper to an extended collision position, lowering a vehicle bumper braking the vehicle and steering the vehicle to avoid the detected object.

10. The pedestrian protection system of any of the claims 6 to 9, wherein the first warning and the second warning are directed toward the pedestrian.
